# FASCICULE DE BREVET EUROPEEN

(11) **EP 0 907 480 B1**
(45) Date de publication et mention de la délivrance du brevet: **24.10.2001**
(21) Numéro de dépôt: 97926090.8
(22) Date de dépôt: 03.06.1997
(51) Int. Cl.: B29C 45/00, B65D 41/18

(54) **PROCEDE DE FABRICATION EN GRANDE CADENCE D'ASSEMBLAGES DE PIECES EN MATIERE PLASTIQUE**
HOCHLEISTUNGSVERFAHREN ZUM HERSTELLEN VON KUNSTSTOFFMONTAGETEILEN
HIGH SPEED RATE METHOD FOR MANUFACTURING PLASTIC ASSEMBLY PARTS

(30) Priorité: 06.06.1996 FR 9607249
(43) Date de publication de la demande: 14.04.1999
(73) Titulaire: CEBAL S.A., F-92115 Clichy (FR)
(72) Inventeur: REBEYROLLE, Michel, F-51510 Fagnières (FR); SCHNEIDER, Bernard, F-51800 Sainte Menehould (FR); JOYEUX, Marc, F-51800 Sainte Menehould (FR)
(74) Mandataire: Pigasse, Daniel
(86) Numéro de dépôt international: FR9700974
(87) Numéro de publication internationale: WO9746362

(56) Documents cités:
- EP-A- 0 073 356
- WO-A-91/01213
- DE-A- 1 941 479
- FR-A- 2 436 278
- US-A- 3 281 295
- PATENT ABSTRACTS OF JAPAN vol. 10, no. 207 (M-500) [2263] , 19 Juillet 1986 & JP 61 047223 A (KAMAYA KAGAKU KOGYO KK), 7 Mars 1986,
- PATENT ABSTRACTS OF JAPAN vol. 13, no. 497 (M-889) [3845] , 9 Novembre 1989 & JP 01 198316 A (TOYOTA MOTOR CORP), 9 Août 1989,

## Description

### DOMAINE DE L'INVENTION

L'invention concerne un procédé économique de fabrication en grande cadence d'assemblages constitué d'au moins deux pièces en matière plastique mobiles l'une par rapport à l'autre et se trouvant au moins dans une configuration où leurs surfaces de contact épousent des formes complémentaires en un contact intime et sans jeu.

### ETAT DE LA TECHNIQUE

De tels assemblages se retrouvent dans une grande quantité d'objets, par exemple des objects comportant deux pièces solidarisées temporairement par vissage ou encliquetage, tels que des tubes souples munis de leurs bouchons ou, plus généralement, des têtes de récipient munies de leurs capsules de bouchage, ou des objets ayant des éléments en rotation relative l'un par rapport à l'autre, tels que des rotules d'articulation, des charnières, des couvercles ou dessus tournants perforés, ou encore des éléments glissants, tels que des tiroirs pour boîtes de maquillage ou des fermetures à glissière.

Les pièces de ces assemblages sont fabriquées séparément puis assemblées. Les opérations de fabrication séparée et d'assemblage sont longues et onéreuses car elles nécessitent des machines spécifiques. Depuis longtemps, on a cherché à améliorer le prix de revient et la cadence de production de tels assemblages en essayant de mettre en forme les pièces dans un même cycle de fabrication sans avoir besoin de les assembler. Placées d'emblée dans une de leurs configurations d'emploi, elles doivent cependant pouvoir se déplacer l'une par rapport à l'autre facilement.

La demande de brevet FR 2 451 867 propose ainsi un procédé permettant de fabriquer un tube souple muni de sa capsule, qui est directement moulée autour de goulot. De façon à pouvoir dévisser facilement la capsule du goulot, le goulot est en une matière à point de fusion supérieur à celui de la résine de la capsule, soit entièrement métallique, soit en un multicouche métalloplastique, la résine synthétique formant la paroi intérieure du tube et du goulot. De la sorte, le goulot ne fond pas lorsqu'il entre directement en contact avec la résine fondue. Outre le problème actuel de recyclage des métalloplastiques, l'emploi de tubes métalliques ou métalloplastiques entraîne de nombreuses difficultés de fabrication en grande série, car leur grande déformabilité impose des précautions de manipulations peu compatibles avec les cadences industrielles recherchées, à savoir plusieurs centaines d'unités par minute.

Dans la demande FR 2 320 870, on a cherché à mouler une capsule directement sur un goulot de tube souple en une matière qui ne doit pas se ramollir ni fondre dans les conditions de température et de pression du surmoulage de la capsule. Outre les solutions métalliques et métalloplastiques proposées précédemment, l'auteur développe une solution à base de résine thermodurcissable du type urée-formaldéhyde. Mais cette solution impose l'emploi d'un insert fabriqué séparément, ce qui éloigne du but recherché. D'autre part, la fixation d'un tel insert au reste du tube ne peut se faire par soudure en raison de l'incompatibilité d'une telle résine avec les matériaux couramment employés pour les jupes de tubes et, dans ce cas, la fixation purement mécanique de l'insert sur la jupe ne peut qu'entraîner des problèmes d'étanchéité et de barrière aux arômes.

Des procédés pour obtenir de tels assemblages composés de pièces entièrement polymériques ont également été proposés par DE 19 41 479, EP 0 073 356, US 3 281 295, WO 91/01213 et JP 61 047 223. Une première pièce est réalisée puis une deuxième pièce est moulée sur la première pièce refroidie qui fait office, au moins partiellement, de moule. Dans DE 1941 479, US 3 281 295, WO 91/01213 et JP 61 047 223, le matériau de la deuxième pièce a obligatoirement une température de fusion (ou d'adoucissement) plus faible que la température de fusion (resp. d'adoucissement) de la première pièce. Dans EP 0 073 356, il semble qu'il s'agisse du même matériau, ce dernier n'étant pas précisé.

### PROBLEME POSE

Ayant cherché à développer une solution concernant le même domaine que celui des documents précédemment cités mais moins coûteuse et acceptable dans le cadre d'une fabrication en grande cadence, la demanderesse s'est rendu compte que cette solution répondait à un problème plus vaste que celui des capsules surmoulées sur un goulot mais concernait également tout procédé de fabrication en grande cadence d'objets comportant un assemblage de pièces ayant des surfaces de contact complémentaires et mobiles l'une par rapport à l'autre, la deuxième pièce moulée devant être plus rigide que l'autre.

### EXPOSE DE L'INVENTION

Le procédé selon l'invention concerne la fabrication d'objets ou de parties d'objets constituées par un assemblage comprenant au moins deux pièces en matières plastiques, mobiles l'une par rapport à l'autre et se trouvant au moins dans une configuration où leurs surfaces de contact épousent des formes complémentaires, comportant les étapes suivantes:
a) mise en forme d'une première pièce en matière plastique par rapprochement d'un premier outillage externe dont l'empreinte définit au moins la forme globalement convexe d'une surface destinée à être en contact avec la deuxième pièce et un outillage interne comportant au moins un noyau entrant dans le volume interne de ladite surface globalement convexe;
b) écartement dudit premier outillage externe et maintien de la première pièce sur l'outillage interne;
c) mise en place d'un deuxième outillage externe dont l'empreinte délimite avec la surface globalement convexe de la première pièce un volume de faible épaisseur au regard de ladite surface globalement convexe;
d) rapprochement dudit deuxième outillage externe et de la première pièce fraîchement formée puis moulage de la deuxième pièce;
e) écartement des outillages et extraction de l'ensemble des deux pièces ainsi formées;
   ledit procédé étant caractérisé en ce que le moulage de la deuxième pièce est effectué en remplissant ledit volume de faible épaisseur au regard de ladite surface globalement convexe avec une matière plastique portée à une température supérieure à la température de fusion de la matière plastique de ladite première pièce.

L'étape a) correspond à un procédé de mise en forme classique, tel que le moulage par injection ou le moulage par compression ou encore le thermoformage. La première pièce possède une surface qui sera en contact avec la deuxième pièce et qui est de forme convexe. Ce procédé nécessite l'emploi d'un outillage dit externe, parce qu'il forme au moins en partie cette surface globalement convexe, et celui d'un outillage dit interne parce qu'il comporte au moins un noyau entrant dans le volume intérieur de la surface convexe. La surface est dite globalement convexe, car elle peut comporter des détails en saillie de petite dimension ou encore des trous, ces trous étant occupés par le noyau de l'outillage interne. Ainsi, dans le cas d'un assemblage goulot - bouchon, le goulot fait partie de la première pièce et la paroi cylindrique extérieure du goulot, munie ou non d'un filetage, constitue une surface globalement convexe, trouée à l'endroit de l'orifice de distribution du goulot. Ce trou est occupé jusqu'à l'étape d) du procédé par une partie en forme d'appendice du noyau, ce dernier formant la surface interne du goulot.

Le noyau se trouve proche en tout point de la surface, de sorte que la première pièce ainsi formée a une épaisseur assez faible au regard de ladite surface de contact. Suivant la forme de la première pièce, l'outillage externe peut être monobloc ou au contraire comporter plusieurs parties en tiroirs coulissants, devant être accolées avant la mise en forme.

L'étape b) suit l'étape a) et précède l'étape c) en un temps très court: la matière plastique de la première pièce n'est pas encore complètement stabilisée lorsqu'on entame l'étape c), où l'outillage externe de l'étape a) est remplacé par un autre outillage externe, appelé deuxième outillage externe, qui, une fois placé directement en contact de la première pièce délimite avec celle-ci, par son empreinte et la surface globalement convexe de la première pièce, un volume de faible épaisseur, destiné à être occupé par la matière plastique de la deuxième pièce.

Lorsque la surface globalement convexe de la première pièce est trouée, le noyau étant maintenu en place, sa partie en forme d'appendice qui a servi à réaliser les trous au cours de l'étape a) est utilisée pour définir exhaustivement le volume à remplir. Ainsi, dans le cas de la mise en forme d'un ensemble goulot - bouchon, le noyau permettant de réaliser la surface interne du goulot, est maintenu en place et sert lors de la phase d) à réaliser la partie de la face interne de la coiffe du bouchon qui se trouve en face de l'orifice.

La deuxième pièce est mise en forme au cours de l'étape d), en occupant au moins le volume défini par le rapprochement du deuxième outillage externe et de la première pièce maintenue sur l'outillage interne et qui, éventuellement avec l'aide de parties du noyau, fait office de moule. Une surface globalement concave est formée directement contre la surface globalement convexe de la première pièce. Le volume laissé par le rapprochement des outillages et de la première pièce confère à la deuxième pièce l'aspect d'une coque plus ou moins épaisse au voisinage de cette surface globalement concave. A la fin du procédé, cette deuxième pièce est détachée de la première par séparation de ladite surface globalement convexe et de ladite surface globalement concave qui lui a en quelque sorte servi de moule. Nous appellerons cette séparation "dernière phase du démoulage" ou "démoulage final" de la deuxième pièce.

Une fois détachée, ladite deuxième pièce est destinée à être à nouveau assemblée avec la première pièce, tout en restant mobile par rapport à elle mais en ayant la possibilité de se trouver maintenue dans une position où sadite surface globalement concave ainsi formée est placée en un contact complémentaire intime et sans jeu avec ladite surface globalement convexe de la première pièce, qui lui a servi de moule.

La surface est globalement concave parce que, complémentaire de la surface globalement convexe, elle est susceptible de porter des détails de petite dimension ou encore parce que le noyau ou le deuxième outillage extérieur sont munis de prolongements permettant de former des trous dans la deuxième pièce.

La matière plastique employée pour la mise en forme de la deuxième pièce est différente de celle de la première pièce, en ce sens que ces deux matières ne sont pas miscibles. Contrairement aux documents précités, il n'est pas nécessaire que la matière de la première pièce ait un point de fusion supérieur à celui de la matière de la deuxième pièce. Dans un exemple qui sera détaillé par la suite, la demanderesse a développé une solution surprenante où la capsule est en polypropylène et le goulot en polyéthylène, c'est-à-dire où la capsule est surmoulée sur le goulot avec du polypropylène porté à une température supérieure de près de 80°C à la température de fusion du goulot. Le résultat, surprenant et remarquable, est sans doute dû au maintien de l'outillage interne au cours du surmoulage et à la proximité du noyau en tout point de la surface globalement convexe de la première pièce.

Dans cette modalité préférée de l'invention, il est de plus possible d'imposer des déformations à des parties géométriques de la première pièce au cours du surmoulage de la seconde. Ainsi, soit par la forme du deuxième outillage externe, soit par celle de l'outillage complémentaire, soit encore par la forme même de la première pièce, on peut contrôler le flux de la deuxième matière plastique de façon à faire fluer une partie en saillie de la première pièce. De la sorte, un épaulement de la première pièce peut voir une de ses parois se mettre en contre-dépouille, dans une configuration géométrique favorable à un léger encliquetage, c'est-à-dire permettant ainsi un piégeage de la deuxième pièce par la première.

Le procédé selon l'invention est avantageusement complété par l'étape f) suivante:
f) refroidissement et stabilisation complète des deux matières plastiques avant la dernière phase de démoulage de la deuxième pièce qui consiste en un déplacement relatif d'une pièce ou d'une partie d'une pièce par rapport à l'autre.

On laisse donc refroidir l'ensemble ainsi formé et on attend la stabilisation complète des deux matières plastiques avant de déplacer une pièce relativement à l'autre. Ce déplacement constitue en quelque sorte la dernière phase de démoulage de la deuxième pièce. La stabilisation dimensionnelle de la première pièce est accélérée par le recuit dû au surmoulage de la deuxième pièce mais la stabilisation complète de la deuxième matière plastique peut nécessiter plusieurs jours. Ceci n'empêche pas d'effectuer des opérations de fabrication complémentaires avec l'ensemble de ces deux pièces, maintenues solidaires pendant cette période. Ainsi, dans le cas de tubes souples devant être remplis par le produit qu'ils sont destinés à contenir, la tête de tube munie de sa capsule à l'aide de ce procédé est soudée sur une jupe souple puis l'ensemble est retourné pour recevoir ledit produit sans qu'il y ait besoin d'attendre la stabilisation complète des matières plastiques. C'est l'utilisateur final qui effectuera lui-même la dernière phase de démoulage de la capsule en opérant le dévissage destiné à la première ouverture du tube.

La demanderesse a constaté que cette stabilisation, sans doute grâce au retrait complet de la seconde matière plastique, améliorait la qualité du contact intime entre les pièces. Le jeu pratiquement nul qui s'établit entre les deux surfaces de contact rend cette liaison parfaitement étanche. Une telle cohérence entre surfaces ne pouvait pas être obtenue dans des conditions de fabrication en grande série avant la présente invention.
Ainsi, avec ce procédé, on peut obtenir des assemblages goulot-capsule parfaitement étanches, avec des moyens de vissage beaucoup moins profonds que ceux équipant les capsules fabriquées séparément, ce qui permet de les rendre deux fois plus minces.

Les couples de matériaux recommandés selon l'invention sont des thermoplastiques non miscibles entre eux. De préférence, nous choisirons des couples polypropylène - polyéthylène, polyester - polyéthylène, alcool vinylique d'éthylène - polyéthylène, polyamide - polypropylène.

La dernière phase de démoulage de la deuxième pièce consiste en un déplacement relatif d'une pièce ou d'une partie d'une pièce par rapport à l'autre: il suffit de déplacer chacune des parties de pièce qui se situe au voisinage de la surface commune de contact. Ce déplacement est effectué préférentiellement après stabilisation thermique et dimensionnelle complète, l'idéal étant de l'inclure dans une opération habituellement exécutée par l'utilisateur final. Encore faut-il qu'il n'ait pas à fournir d'effort supplémentaire.

En effet, si la stabilisation rend le contact entre surfaces complémentaires intime et sans jeu, elle entraîne également une augmentation du couple de desserrage. Pour pallier à cette difficulté, deux solutions combinables ont été adoptées avec succès: on joue soit sur les matériaux constitutifs, soit sur la géométrie des surfaces, notamment des détails dont elles sont munies. Souvent les surfaces de contact complémentaires sont munies de moyens de solidarisation temporaire des deux pièces, tels que des filetages et l'on peut jouer sur leur forme: judicieusement dessinés, ces filetages peuvent participer efficacement au démoulage final de la deuxième pièce par désolidarisation des deux surfaces. Ce sont des filets rapides, multiples, coniques et peu profonds. Ils peuvent avoir une faible longueur et ne pas s'étendre sur la totalité de la surface commune de contact. Leur géométrie sera détaillée dans les exemples qui suivent. La plupart d'entre elles diffèrent des géométries classiques mais seront vite acceptées dans la mesure où elles remplissent une fonction d'étanchéité nettement améliorée.

Dans le cas où ces surfaces ne peuvent pas porter des filetages, ou encore lorsque ces filetages doivent correspondre à des normes précises, il est possible de jouer sur l'une ou/et l'autre des matières plastiques en leur incorporant des agents glissants, tels que du stéarate de zinc.

En ce qui concerne les assemblages goulot-capsule, ce dernier choix n'est pas toujours possible, car l'emploi d'un agent glissant tel que le stéarate de zinc est peu recommandé dans les domaines pharmaceutique, parapharmaceutique ou cosmétique. Dans ce cas, on peut dessiner un système goulot-capsule démuni de filetage en donnant aux surfaces de contact du goulot et de la capsule des formes cylindriques mais à section orthogonale elliptique, le rapport du petit axe sur le grand axe devant rester supérieur à une valeur critique. En effet, en-dessous de cette valeur, on ne pourrait pas éviter une déformation plastique irréversible des surfaces. Dans le cas de bouchons en polypropylène moulés sur des goulots en polyéthylène, ces bouchons ayant un diamètre moyen compris entre 15 et 45 millimètres et une épaisseur de jupe comprise entre 0,5 et 2 millimètres, le rapport petit axe sur grand axe doit rester supérieur à 0,9.

Ce même principe peut être généralisé à d'autres géométries que celles des couples goulot-capsule: lorsque le déplacement relatif d'une pièce par rapport à l'autre admet un axe de rotation et que cet axe coïncide avec un axe de symétrie de la surface commune de contact, on peut s'arranger, lorsque cette rotation ne remplit pas un rôle fonctionnel spécifique et permanent de l'assemblage (cas de charnières ou de rotules), pour éviter que cet axe soit un axe d'axisymétrie: ainsi la rotation entraîne inévitablement une déformation élastique globale de ces pièces, la deuxième étant peu épaisse au niveau de leur surface de contact commune; et cette déformation d'ensemble contribue à la désolidarisation des deux surfaces.

Les possibilités de réalisation sont multiples, le choix des matériaux des deux pièces et/ou de la géométrie de leur surface commune de contact permet dans la plupart des cas de pouvoir démouler la deuxième pièce de la première. Ce procédé permet d'obtenir une étanchéité remarquable, jusque-là non rencontrée sur des pièces fabriquées en grande cadence. Mais, dans certaines configurations, il est également nécessaire d'assurer le maintien des pièces en contact l'une de l'autre. Ce maintien peut être temporaire (il s'agit par exemple des capsules qui doivent assurer le bouchage d'un orifice) ou permanent ( il s'agit par exemple d'un ancrage d'une partie de la deuxième pièce dans la première)

Pour augmenter la sécurité de fermeture d'une capsule, on pourrait ajouter sur les surfaces de contact un système d'encliquetage constitué d'une rainure et d'une nervure complémentaires mais ce système supplémentaire ne favorise pas le démoulage final de la deuxième pièce. Pour assurer l'ancrage d'une partie de la seconde pièce sur la première, constitué par exemple par une queue d'aronde sur la première pièce, il faudrait, au moment de la mise en forme de la première pièce, employer des outillages en contre-dépouille à cinématique complexe voire impossible. Le procédé selon l'invention permet de résoudre ces problèmes de façon beaucoup plus simple.

Nous avons vu en effet qu'il laisse toute possibilité de jouer sur le contrôle du flux de la matière plastique au cours de la mise en forme de la deuxième pièce. Il est par ce biais possible d'imposer des déformations à des parties géométriques de la première pièce au cours du surmoulage de la seconde. Sous l'effet de la chaleur, de l'écoulement de la seconde matière plastique et des efforts mis en jeu pour assurer cet écoulement, un épaulement de la première pièce peut voir une de ses parois se mettre en contre-dépouille, dans une configuration géométrique créant une aspérité qui, même si elle est de très faible hauteur, est favorable à un piégeage léger et suffisant pour assurer soit un encliquetage soit un ancrage de la deuxième pièce sur la première. Nous verrons par la suite un exemple d'encliquetage et un autre d'ancrage.

D'autres caractéristiques et avantages apparaîtront dans la description des dispositifs particuliers de l'invention donnés ci-après à titre d'exemples nullement limitatifs.
La figure 1 représente, en coupe axiale, une tête de tube munie d'un bouchon surmoulé, non munie de moyens de vissage.
La figure 2a représente, en coupe axiale, une tête de tube munie d'un bouchon surmoulé vissable, le filetage n'occupant que la base du goulot
La figure 2b représente, en coupe axiale, une tête de tube en forme de canule munie d'un bouchon surmoulé vissable, où le filetage occupe également une faible partie de la surface commune de contact entre le bouchon et la tête.
La figure 3a représente, en coupe axiale, une tête de tube avec une coiffe à charnière surmoulée.
La figure 3b représente, en vue de dessus, la tête de tube avec une coiffe à charnière surmoulée de la figure 3a.
La figure 3c représente, en coupe axiale, un agrandissement de la zone d'ancrage de la base de la charnière sur la tête de tube de la figure 3a.
La figure 4a est une vue en coupe axiale illustrant l'étape a) du procédé de fabrication selon l'invention employé pour la réalisation de la tête de la figure 2a.
La figure 4b est une vue en coupe axiale illustrant l'étape d) du procédé de fabrication selon l'invention employé pour la réalisation de la tête de la figure 2a.
La figure 5a représente une autre tête de tube avec bouchon surmoulé, le goulot dans sa partie supérieure et le bouchon étant représentés en coupe axiale. Le bouchon est surmoulé muni d'une bande de garantie d'inviolabilité.
La figure 5b représente, grossi et en coupe axiale, un autre moyen garantissant l'inviolabilité placé directement sur la jupe d'un bouchon surmoulé tel que celui représenté en figure 2a.
La figure 6a représente, en coupe axiale, une tête de tube avec bouchon bi-corps, une pièce à double jupe étant surmoulée sur la tête puis associée à un disque obturateur du creux supérieur.
La figure 6b représente, en coupe axiale, le détail de la base du goulot de la tête de la figure 6a au niveau du bourrelet d'encliquetage de sécurité anti-dévissage
La figure 7a représente, en coupe axiale, une tête de tube munie de l'ébauche de bouchon surmoulée, qui après enfoncement puis immobilisation de la jupe supérieure suivant le procédé décrit dans la demande de brevet français n° 96 - 05342, devient le bouchon double-jupe de la figure 7b.

### EXEMPLES

Les exemples illustrent de nombreuses variantes concernant la réalisation de tubes souples munis de leur bouchon. Ils peuvent concerner d'une façon plus générale, la réalisation de toute tête en matière plastique adaptable sur un récipient de forme et de matière quelconque, munie d'un orifice de distribution entouré par un goulot et bouché par une capsule. Dans tout le présent texte, les termes "bouchon", plutôt réservé aux tubes souples, et "capsule", plutôt réservé aux récipients, sont synonymes.

Habituellement, la capsule et la tête sont fabriquées séparément. Tôt ou tard, il est nécessaire de solidariser la capsule et la tête, ne serait-ce que pour protéger le produit contenu dans le récipient et empêcher qu'il n'en sorte. Cette solidarisation est effectuée la première fois dans les conditions industrielles de fabrication du récipient ou de remplissage du produit. Le bouchage qui en résulte doit être maintenu hermétique avant la première utilisation. Les mêmes moyens de solidarisation doivent ensuite servir à plusieurs reprises tout au long de l'utilisation du produit.

Dans le cas des tubes souples fabriqués en grande série et à grande cadence, tels que ceux destinés à contenir et distribuer de la pâte dentifrice, le bouchon est vissé sur la tête en bout de chaîne de fabrication par l'intermédiaire de machines automatiques complexes. Ces machines amènent, au rythme de plusieurs centaines par minute, un bouchon devant chaque tête, ce dernier devant être muni d'un filetage parfaitement adapté à la tête qui lui fait face, puis mettent en rotation et en translation relatives la tête par rapport au bouchon. Cette opération de vissage automatique du bouchon nécessite l'investissement de machines automatiques complexes et entraîne une préparation particulière des pièces, leur contrôle dimensionnel et leur tri, de façon à limiter le taux de rebut.

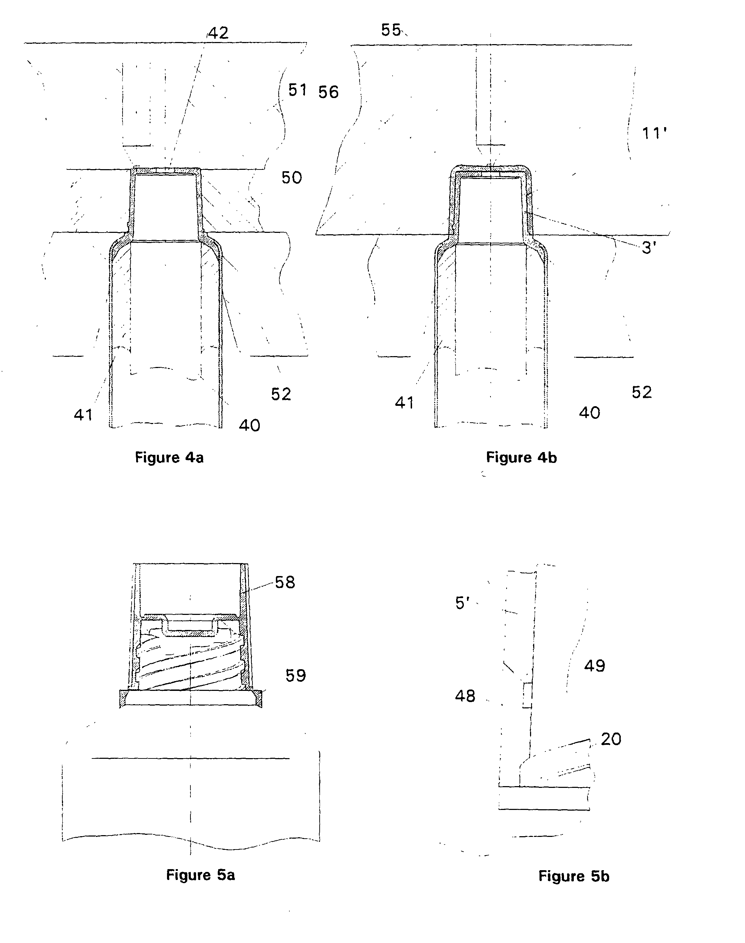

Pour rendre moins coûteuse la première solidarisation du bouchon et de la tête, on a donc cherché à mouler directement le bouchon sur le goulot qui entoure l'orifice de distribution. La géométrie globale de la surface externe du goulot et de la surface interne de bouchon est cylindrique ou, de préférence, légèrement tronconique. En fonction des conditions d'emploi et de garantie de fermeture et d'étanchéité imposées au tube, le goulot est muni ou non de moyens de solidarisation temporaire. Plusieurs variantes ont été ainsi déclinées autour de cette invention, qui sont exposées dans 8 exemples, le détail des phases du procédé étant présenté dans l'exemple 3. Pour tous les exemples donnés ci-après et pour lesquels le bouchon ou la capsule est solidarisée au goulot par vissage, il est facile d'opérer comme dans l'exemple de la figure 5, c'est-à-dire d'adapter les moules destinés au surmoulage direct du bouchon sur le goulot de façon à réaliser à la base de cette dernière une bande de garantie d'inviolabilité.

### Exemple 1 : Tube avec bouchon surmoulé directement sur le goulot, non muni de moyens de vissage

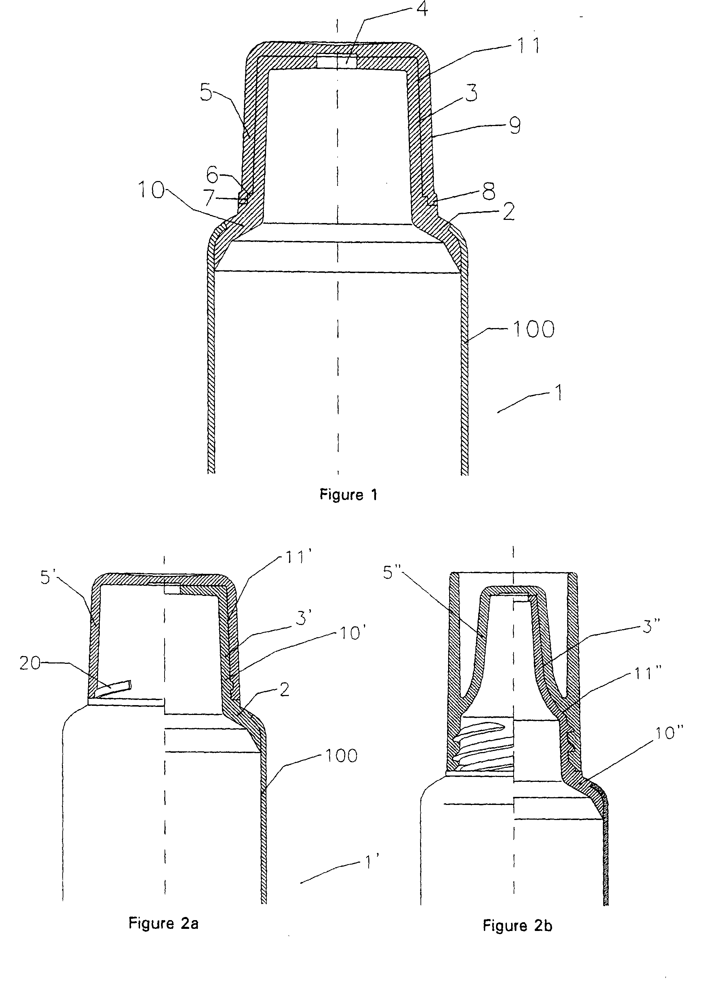

Dans ce premier exemple représenté sur la figure **1**, le tube **1** est muni d'une tête **10** constituée d'une épaule **2** et d'un goulot **3** percé en son sommet d'un orifice de distribution **4**. Le goulot **3** ne comporte aucune aspérité et le bouchon **5** est surmoulé par injection directement sur la surface extérieure **11** du goulot **3**. Le contact intime des surfaces obtenues par ce procédé assure un maintien parfaitement étanche du bouchon **5** sur le goulot **3**.

Le goulot et le bouchon sont dans cet exemple tronconiques avec un demi-angle au sommet compris entre 2° et 3° mais, pour faciliter le démoulage final du bouchon, il est possible également de leur donner une forme cylindrique à section orthogonale elliptique, le rapport petit axe/grand axe restant supérieur à 0,9.

Le simple contact des surfaces extérieure **11** du goulot 3 et intérieure du bouchon **5** assure le maintien de l'ensemble, donc la fermeture de l'orifice dans des conditions satisfaisantes, mais, si l'on veut assurer une meilleure sécurité de fermeture, il suffit d'ajouter à la base du goulot **3** un épaulement **6**. Au cours du surmoulage, si le point d'injection correspond à celui décrit dans l'exemple suivant et la figure 4b, l'angle supérieur de cet épaulement **6** flue, de telle sorte que sa paroi verticale **7** se met en légère contre-dépouille. De façon complémentaire, la face interne du bouchon va comporter à son extrémité **8** un relief interne qui, associé à la dite paroi en contre-dépouille de l'épaulement **7**, permet un encliquetage à peine perceptible du bouchage en fin d'enfoncement et fait obstacle au débouchage intempestif du bouchon, même après plusieurs utilisations.

Un tel tube, très simple, esthétique, est parfaitement adapté au conditionnement économique d'échantillons, pour lesquels un nombre limité de débouchages-rebouchages est prévu.

### Exemple 2 : Tête de tube avec bouchon surmoulé en une matière plastique enrichie de stéarate de zinc.

Dans ce deuxième exemple, le goulot porte un filetage imposé, semblable au filetage classiquement utilisé, constitué d'un filet unique de section trapézoïdale et en forme d'hélice de plus de 2 spires, en général 3 à 4 spires.

La capsule est dans ce cas surmoulée avec une matière plastique comprenant une forte charge d'agent glissant, tel que du stéarate de zinc. Le couple de dévissage au démoulage est important mais acceptable pour les bouchons qui facilitent la prise en main de l'utilisateur: leur paroi externe est munie de moyens de préhension sans glissement, tels que des stries, et a un grand diamètre, ce qui donne un effet multiplicateur des efforts de dévissage. Si la section trapézoïdale de ce filetage imposé peut être modifiée, on préférera une section en demi-rond.

Une telle solution est limitée sur le plan esthétique, car le bouchon est strié, contrairement au bouchon de l'exemple 1 dont la paroi externe **9** peut être parfaitement lisse. Elle est d'autre part limitée dans ses applications, car l'agent glissant n'est pas toujours recommandé dans les domaines pharmaceutique, parapharmaceutique ou cosmétique.

Par contre, elle peut présenter l'avantage de reprendre la forme ancienne globale du produit auquel le consommateur est habitué.

### Exemple 3: Tête de tube avec bouchon surmoulé muni des filets de vissage courts et peu profonds

Le troisième exemple permet de décrire avec l'aide des figures 4a et 4b le procédé selon l'invention appliqué à la tête de tube illustrée en figure 2a.

La figure 4a représente la mise en forme par injection moulage d'une tête de tube **10'** en polyéthylène par rapprochement d'un premier outillage externe **50** dont l'empreinte définit la paroi extérieure du goulot **3'.** Un outillage supérieur **51** définit la paroi supérieure du goulot et un outillage externe inférieur **52** définit la surface extérieure de l'épaule **2.** Le noyau **40** définit la paroi interne du goulot **3'** et est surmonté d'un appendice **42** qui se plaque contre l'outillage supérieur **51** pour réaliser l'orifice **4.** Ici, il y a un premier surmoulage, car l'extrémité de l'épaule **2** se soude intimement sur l'extrémité de la jupe **100** au cours de cette opération.

Le goulot **3'** ainsi formé est, dans cet exemple, muni à la base de sa paroi externe tronconique **11'** d'un filetage **20** conique, court, multiple, rapide et de section particulière, caractérisée par une faible hauteur en relief: 0,3 mm. La pente de l'hélice est assez forte, entre 15 et 25°. La longueur angulaire du filet est de 30°seulement: on laisse la plus grande partie de la surface du goulot lisse, lui donnant ainsi un aspect propre, qui satisfait l'utilisateur autant sur le plan esthétique qu'hygiénique car il y a moins de risque de rétention du produit distribué par le tube.

Les outillages **50** et **51** sont ensuite écartés mais la tête est maintenue en appui sur le noyau **40,** ainsi qu'entre les outillages **41** et **52.**

Sans attendre le refroidissement complet de la tête, un nouvel outillage externe **55** est mis en place sur l'outillage **52.** Son empreinte, la surface extérieure **11'** du goulot **3'** et l'appendice **42** du noyau **40** délimitent un volume **56** de faible épaisseur qui sera occupé par le futur bouchon **5'.** Par ce procédé on peut économiser beaucoup de matière, puisque le bouchon peut être moitié plus mince que lorsqu'il est réalisé séparément. En l'occurrence, on réalise ici un bouchon de 0,7 mm d'épaisseur moyenne.

Après rapprochement des outillages (**55, 3'** et **52**), on injecte du polypropylène porté à une température de 210 °C. Bien que le goulot soit en polyéthylène dont la température de fusion est inférieure à cette température d'injection, le bouchon **5'** se forme parfaitement, possédant à l'extrémité de sa jupe un filetage complémentaire de celui **20** du goulot **3'.** Ce dernier est donc en creux, de faible profondeur (0,3 mm) à forte pente, et multiple: ceci facilite le centrage au cours de l'engagement du bouchon lors d'un rebouchage.

On écarte les outillages et on extrait l'ensemble. On laisse refroidir l'ensemble de façon à ce qu'il y ait stabilisation dimensionnelle complète du goulot et du bouchon. Ceci n'empêche pas de manipuler l'ensemble ainsi formé, par exemple pour remplir le tube avec le produit qu'il est destiné à contenir et distribuer. C'est l'utilisateur final, qui réalise la dernière phase de démoulage du bouchon en effectuant la première ouverture, de façon classique et sans difficulté particulière car le couple de dévissage est faible.

### Exemple 4: Tête de tube en forme de canule avec bouchon surmoulé

Dans cet exemple, illustré en figure 2b, la tête de tube **10"** a un goulot **3"** allongé, en forme de canule, et possède à sa base un filetage court, rapide et multiple. Comme dans l'exemple précédent, la paroi du bouchon **5"** surmoulé épouse intimement la paroi externe du goulot **11",** assurant une parfaite étanchéité. La surface commune de contact est tronconique, ce qui facilite le décollement du bouchon. Une jupe externe, facultative, cylindrique, permet de faciliter la préhension du bouchon.

### Exemple 5: Tête de tube avec coiffe à charnière surmoulée.

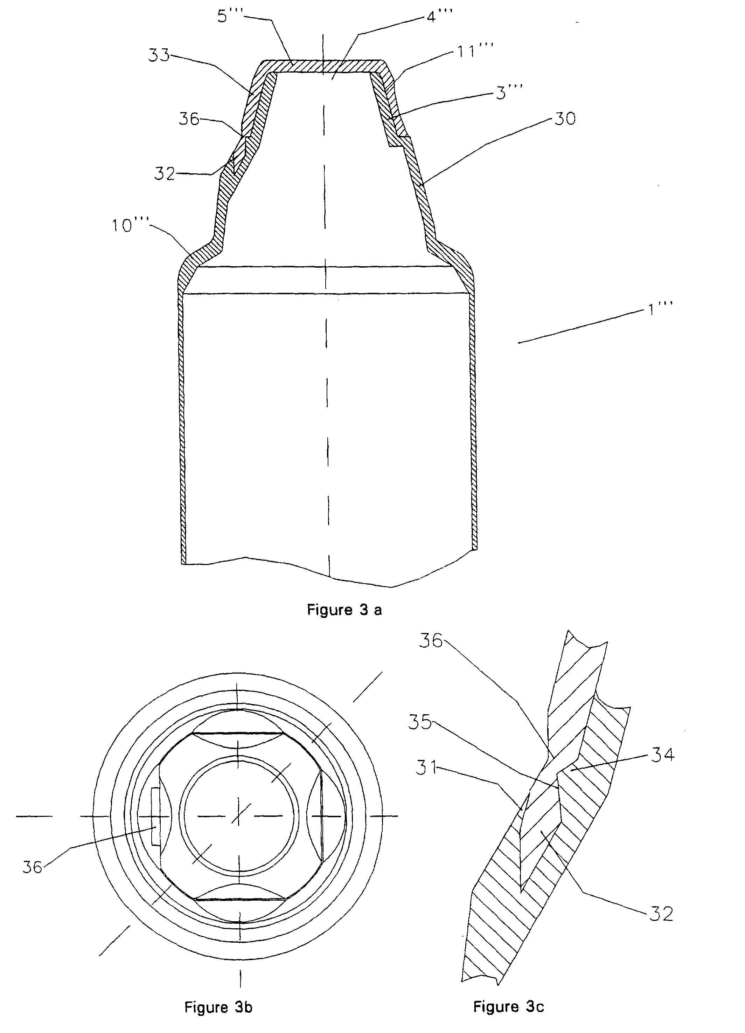

Le procédé de réalisation de ce tube **1**''', illustré en coupe axiale par la figure 3a et en vue de dessus par la figure 3b, diffère des précédents par la réalisation, au cours de la mise en forme de la tête, d'une rainure rectiligne profonde **32** à la base du goulot **30.** La figure 3c montre en détail la section de cette rainure: au cours du moulage de la tête en polyéthylène, un bord **31** de cette rainure **32** est réalisé en saillie verticale. Au cours du surmoulage de la capsule **33,** ce bord **31** est rabattu au dessus de la rainure **32** par le simple rapprochement du deuxième outillage externe, qui globalement semblable à l'outillage **55** de la figure 4b a une empreinte adaptée à cette géométrie particulière. La matière plastique injectée, du polypropylène, fait fluer l'épaulement **34** en remplissant la rainure **32,** mettant ainsi la paroi verticale **35** en contre-dépouille. Cette paroi et le bord **31,** rabattu et ramolli au cours du surmoulage, constituent ensemble un resserrement significatif qui piège la matière plastique remplissant le volume de la rainure **32** et sert de base à une charnière film **36,** destinée à faire pivoter l'ensemble de la coiffe **33** pour libérer l'orifice de distribution **4"'.**

L'ancrage de cette tête de distribution à charnière permet de réaliser des tubes à ouverture facile, pouvant être réalisée avec un seul doigt de la seule main qui tient le tube.

### Exemple 6: Têtes de tube avec bouchon muni d'un moyen de garantie d'inviolabilité

La tête de la figure 5a donne un autre exemple de bouchon réalisable par ce procédé, caractérisé par une jupe supérieure **58** qui facilite la préhension du bouchon, une faible épaisseur, ce qui économise la matière, une partie centrale rentrant à l'intérieur de l'orifice et, au bas de la jupe inférieure, à la base du goulot, une bande de garantie d'inviolabilité **59.** Au regard de cette bande de garantie **59,** la base du goulot est munie de dents, par exemple des dents à rochets comme celles illustrées à la figure 2 de FR 2 665 142 sous la référence 9. La bande de garantie 59, moulée en continuité de la jupe du bouchon par l'intermédiaire de ponts d'alimentation de faible section, occupe les creux laissés par ces dents et ne peut que rester immobile lors de la première rotation destinée au dévissage du bouchon. Sous l'effet de cette rotation, imposée au niveau de la jupe du bouchon, les ponts cassent et libèrent le bouchon dans son mouvement de dévissage.

Les moyens de dévissage représentés sur la figure 5a peuvent être avantageusement remplacés par un filetage conique, court, multiple, rapide et peu profond tel que celui décrit dans l'exemple 3.

La figure **5b** représente, grossi et en coupe axiale, un autre moyen, plus simple, et garantissant également l'inviolabilité. Ce moyen est ménagé sur la jupe du bouchon **5'** de la figure **2a.** Il s'agit d'une pastille **49** moulée en relief avec le goulot **3'.** Lors du surmoulage du bouchon **5',** le deuxième outillage externe est muni au regard de cette pastille **49** d'un appendice tronconique, qui ménage une fenêtre **48** sur la jupe du bouchon **5'.** Lors de la première ouverture, la pastille est cisaillée et tombe; elle joue ainsi le rôle d'un témoin de visualisation de violation de l'emballage.

### Exemple 7: Tête de tube avec bouchon bi-corps.

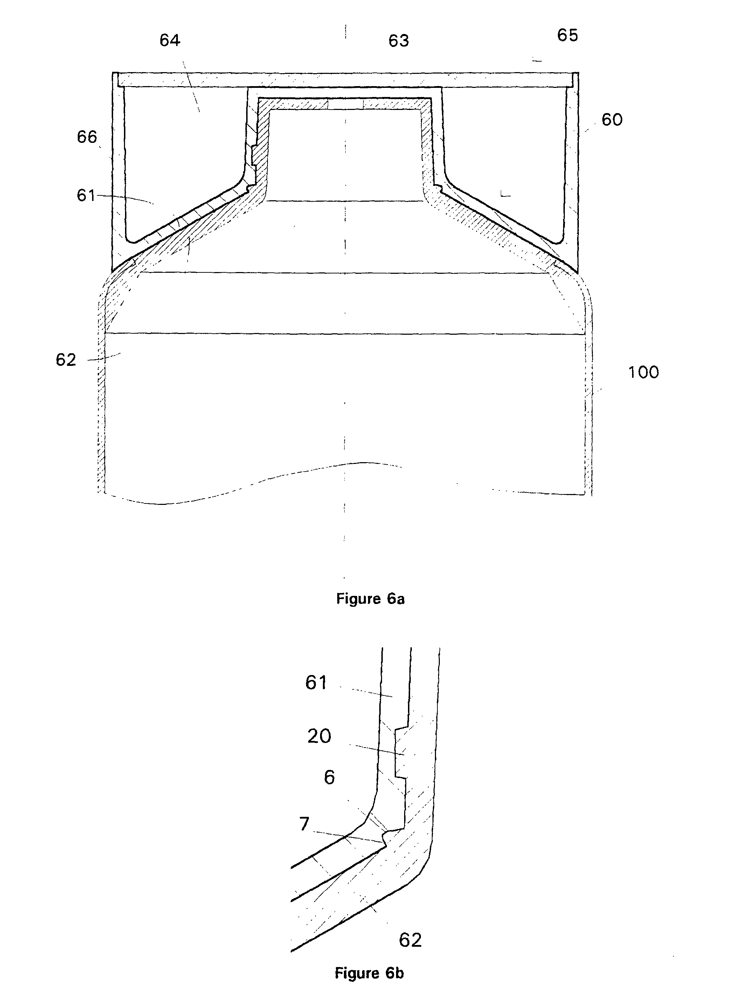

Le bouchon **65** coiffant la tête **60** de la figure 6a est constitué lui même de deux pièces: la première **61** est surmoulée directement sur l'épaule **62** et le goulot, identique au goulot 3' muni d'un filetage **20** à filets courts, multiples, rapides et peu profonds de la figure 2a. Il comprend une jupe externe **66,** qui se place dans le prolongement du corps **100** du tube. Un obturateur **63** est fixé sur le dessus de la première pièce **61** pour recouvrir le creux annulaire **64** de la première pièce **61** et constituer ainsi un bouchon améliorant l'esthétique d'ensemble du tube. Le contact entre la première pièce **61** et la tête du tube correspond à une grande surface puisqu'il couvre la paroi externe du goulot et de l'épaule. Le démoulage final de cette pièce **61** est quand même possible grâce à l'effet bras de levier qui multiplie les efforts appliqués sur la paroi externe de la jupe externe **66** située dans le prolongement du corps de tube **100.**

Un tel tube muni d'un tel bouchon se caractérise par le contact intime du bouchon non seulement contre la paroi du goulot mais également contre celle de l'épaule, permettant d'atteindre une étanchéité exceptionnellement efficace.

### Exemple 8: Tête de tube avec ébauche de bouchon surmoulée possédant une jupe supérieure enfoncable suivant le procédé décrit dans la demande de brevet WO 97/39953

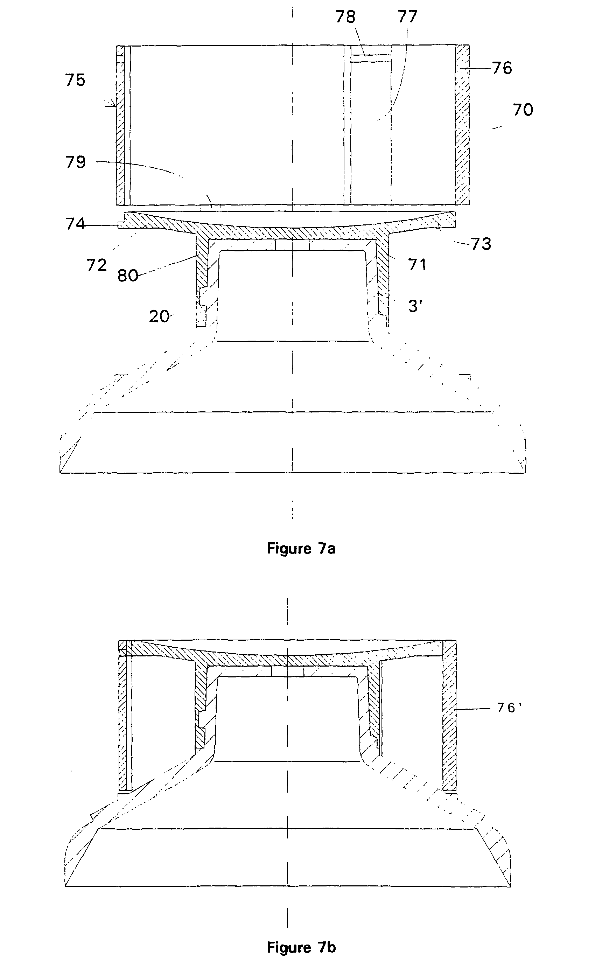

La figure 7a présente une autre tête de tube **70** munie d'une ébauche de bouchon **75** surmoulée directement sur le goulot **3'.** Le goulot **3'** est équipé à sa base d'un filetage **20** à filets courts, rapides, multiples et peu profonds. L'ébauche **75** possède une première pièce **71** directement surmoulée sur le goulot **3',** comportant une première jupe **80** surmontée d'un plateau **72** dont la périphérie **73,** de diamètre supérieur à celui de la première jupe **80,** est munie de trois ergots **74** et est reliée par une zone facilement sécable, ici trois ponts **79** décalés de 60° par rapport aux ergots **74,** à une jupe supérieure **76** qui confère à l'ensemble une forme de chapeau renversé. La surface interne de la jupe supérieure **76** est munie, au regard de chacun des trois ergots **74,** d'une rainure longitudinale **77** peu profonde partant de l'extrémité basse de la jupe supérieure **76** et remontant au moins jusqu'à une cavité **78** un peu plus profonde, apte à piéger un ergot **74.**

Tout de suite après le moulage par injection de cette ébauche **75,** on enlève les outillages extérieurs mais on maintient les outillages intérieurs, du même type que les outillages intérieurs **40** et **41** de la figure 4a. Une plaque vient s'appuyer ensuite sur l'extrémité supérieure de la jupe en imposant un mouvement d'enfoncement: les trois ponts **79** cèdent et la jupe supérieure **76** s'enfonce en s'enfilant autour du plateau **72,** les ergots **74** guidés dans les rainures **77.** Lorsque les cavités **78** arrivent au niveau des ergots **74,** ces derniers sont piégés et il y a immobilisation de la jupe **76,** devenue une jupe **76'** entourant le goulot et solidaire par encliquetage définitif du plateau **72.** Le résultat final est présenté en figure 7b.

Cette solution permet comme la précédente d'obtenir des bouchons de grand diamètre dont l'esthétique est souvent préférée dans l'industrie cosmétique mais elle présente par rapport à celle-ci deux avantages: la surface de contact est plus faible, ce qui améliore les conditions du démoulage du bouchon et il n'y a pas besoin de rapporter une pièce fabriquée séparément, ce qui permet d'avoir des cadences de fabrication très élevées.

Comme indiqué dans la demande de brevet WO 97/39953, il est par ailleurs possible d'adapter une telle ébauche de capsule à toute tête en matière plastique de récipient, de forme et de matière quelconque, munie d'un goulot, la jupe supérieure destinée à être enfoncée puis solidarisée au plateau pouvant être moulée simultanément ou fabriquée séparément.

Le produit obtenu par le procédé selon la demande de brevet WO 97/39953 est caractérisé par la présence d'une capsule en deux parties solidarisées entre elles, par exemple par encliquetage, l'une ayant la forme d'un plateau, l'autre celle d'une jupe entourant le goulot. Dans une modalité préférée, la jupe est munie sur sa surface intérieure de rainures longitudinales adjacentes à des cavités, débouchantes ou non, qui piègent les ergots du plateau. Grâce au procédé selon l'invention, ledit plateau a été surmoulé sur le goulot en une pièce avec une autre jupe, munie de moyens de solidarisation temporaire parfaitement complémentaires de ceux du goulot, par exemple les filets de vissage courts et peu profonds de l'exemple 3.

### AVANTAGES

- économie de matière, notamment par diminution sensible des épaisseurs au niveau des surfaces de contact;
- économie dans le cycle de fabrication à grande cadence, par suppression d'étapes de fabrication séparée et d'assemblage automatisé;
- parfaite étanchéité d'un contact parfaitement intime;
- grande souplesse autorisant un très grand nombre de variantes, avec une multitude de géométries rendues possibles grâce à ce procédé.

## Revendications

1. Procédé de mise en forme d'un assemblage (10 et 5;10'et 5';10'' et 5'';10''' et 5''') comprenant au moins deux pièces en matières plastiques, mobiles l'une par rapport à l'autre et se trouvant au moins dans une configuration où leurs surfaces de contact épousent des formes complémentaires, comportant les étapes suivantes:
a) mise en forme d'une première pièce (10;10';10'';10''') en matière plastique par rapprochement d'un premier outillage externe (50 et 51) dont l'empreinte définit au moins la forme globalement convexe d'une surface (11;11') destinée à être en contact avec la deuxième pièce (5;5';5'';5''') et un outillage interne (40 et 41) comportant au moins un noyau (40) entrant dans le volume interne de ladite surface globalement convexe;
b) écartement dudit premier outillage externe (50 et 51) et maintien de la première pièce sur l'outillage interne (40 et 41);
c) mise en place d'un deuxième outillage externe (55) dont l'empreinte délimite avec la surface globalement convexe (11;11') de la première pièce un volume (56) de faible épaisseur au regard de ladite surface globalement convexe;
d) rapprochement dudit deuxième outillage externe (55) et de la première pièce (10;10';10'';10''') puis moulage de la deuxième pièce (5;5';5'';5''');
e) écartement des outillages (55 et 52; 40 et 41) et extraction de l'ensemble des deux pièces ainsi formées (10 et 5;10'et 5';10" et 5";10"' et 5''')
**caractérisé en ce que** le moulage de la deuxième pièce est effectué en remplissant ledit volume (56) de faible épaisseur au regard de ladite surface globalement convexe (11;11') avec une matière plastique portée à une température supérieure à la température de fusion de la matière plastique de ladite première pièce.

2. Procédé selon la revendication 1, **caractérisé en ce que** la matière plastique de la première pièce (10;10';10'';10''') n'est pas complètement stabilisée lorsqu'on entame l'étape c).

3. Procédé selon la revendication 1, **caractérisé en ce qu'**il est complété par l'étape finale suivante:
f) refroidissement et stabilisation complète des deux matières plastiques avant la dernière phase de démoulage de la deuxième pièce (5;5';5'';5''') qui consiste en un déplacement relatif d'une pièce (5;5';5'') ou d'une partie d'une pièce (5''') par rapport à l'autre (10;10';10'';10''')

4. Procédé selon la revendication 1, **caractérisé en ce que** le noyau (40) de l'outillage interne (40 et 41) se trouve proche en tout point de la surface globalement convexe (11') de la première pièce (10').

5. Procédé selon la revendication 1, **caractérisé en ce que** la matière plastique de la deuxième pièce comporte un agent glissant.

6. Procédé selon la revendication 1, **caractérisé en ce que** la première pièce (5, 5', 5", 5''') est en polyéthylène et la deuxième pièce (10,10',10'',10''') est en polypropylène.

7. Procédé selon la revendication 1, **caractérisé en ce que** les surfaces globalement convexe de la première pièce et globalement concave de la deuxième pièce sont munies de moyens de solidarisation temporaire qui coopèrent à la dernière phase de démoulage de la deuxième pièce.

8. Procédé de mise en forme d'une tête de récipient comprenant un goulot et munie de sa capsule de bouchage (10 et 5;10'et 5'; 10" et 5"; 10''' et 5'''), comportant les étapes suivantes:
a) moulage de la tête (10;10';10";10"') en matière plastique par rapprochement d'un premier outillage externe (50 et 51) dont l'empreinte définit la surface extérieure de l'épaule et celle de la surface extérieure du goulot (3;3';3";3") et un outillage interne (40 et 41) comportant un noyau (40) destiné à former au moins la surface intérieure du goulot (3;3';3";3");
b) écartement dudit premier outillage externe (50 et 51) et maintien de la tête sur l'outillage interne (40 et 41);
c) mise en place d'un deuxième outillage externe (55) dont l'empreinte délimite avec la surface extérieure (11 ;11';11'';11''') du goulot (3;3';3'';3''') un volume (56) de faible épaisseur;
d) rapprochement dudit deuxième outillage externe (55) et de la tête (10;10';10'';10''') puis moulage de la capsule (5;5';5'';5''');
e) écartement des outillages (55 et 52; 40 et 41) et extraction de la tête de récipient munie de sa capsule ainsi formée (10 et 5;10'et 5'; 10" et 5"; 10"' et 5''');
f) refroidissement et stabilisation complète des deux matières plastiques avant la dernière phase de démoulage de la capsule (5;5';5";5"') qui consiste en un déplacement de la capsule (5;5';5") ou d'une partie de la capsule (5''') par rapport au goulot (10;10';10'';10''');
**caractérisé en ce que** le moulage de la capsule (5;5';5";5"') est effectué en remplissant ledit volume (56) de faible épaisseur au regard de ladite surface extérieure (11;11';11";11"') du goulot (3;3';3";3"') avec une matière plastique portée à une température supérieure à la température de fusion de la matière plastique de ladite première pièce.

9. Procédé de mise en forme d'une tête de récipient selon la revendication 8, **caractérisé en ce que** la capsule (5;5';5";5"') est en polypropylène et **en ce que** le goulot (10;10';10'';10''') est en polyéthylène.

10. Tête de récipient (10) munie de sa capsule (5) comprenant un goulot cylindrique, la surface extérieure dudit goulot ne comportant aucune aspérité et se trouvant, quand le récipient est bouché, en contact intime et sans jeu avec la surface intérieure de ladite capsule, **caractérisée en ce que** ladite capsule est en une matière dont la température de fusion est supérieure à la matière constituant le goulot et **en ce que** ledit goulot a une section orthogonale elliptique, le rapport petit axe / grand axe restant supérieur à 0,9.

11. Tête de récipient munie de sa capsule (5) comprenant un goulot (3), la surface extérieure du goulot et la surface intérieure de la capsule étant, quand le récipient est bouché, en contact intime et sans jeu et portant des moyens de vissage parfaitement complémentaires correspondant à un filetage constitué d'un filet unique de section trapézoïdale **caractérisé en ce que** ladite capsule est en une matière plastique dont la température de fusion est supérieure à la matière constituant le goulot, **en ce que** ledit goulot fileté est réalisé d'une seule pièce et **en ce que** la matière plastique de la capsule contient un agent glissant.

12. Tête de récipient (10') munie de sa capsule (5') comprenant un goulot (3'), la surface extérieure (11') du goulot (3') et la surface intérieure de la capsule étant, quand le récipient est bouché, en contact intime et sans jeu, **caractérisée en ce que** ladite capsule est en une matière plastique dont la température de fusion est supérieure à la matière constituant le goulot et **en ce que** lesdites surface extérieure (11') du goulot (3') et surface intérieure de la capsule portent des moyens de vissage parfaitement complémentaires correspondant à des filets (20) peu profonds.

13. Tête de récipient (10') munie de sa capsule (5') comprenant un goulot (3') selon la revendication 12, **caractérisée en ce que** lesdits filets (20) peu profonds sont des filets rapides, multiples et courts.

14. Tête de récipient munie de sa capsule de bouchage selon l'une quelconque des revendications 10 à 13, **caractérisée en ce que** la capsule est munie dans sa partie inférieure d'une bande de garantie d'inviolabilité (59).

15. Tête de récipient munie de sa capsule de bouchage selon l'une quelconque des revendications 10 à 14, **caractérisée en ce que** la surface extérieure du goulot est munie d'une pastille (49) et **en ce que** la surface interne de la capsule est munie au regard de ladite pastille d'une fenêtre (48) prolongeant l'orifice parfaitement complémentaire de ladite pastille (49), jouant le rôle de témoin de visualisation de la violation dudit récipient.

16. Tête de récipient (60;70) munie de sa capsule (65;75) selon l'une quelconque des revendications 10 à 14, **caractérisée en ce que** la capsule (65;75) comporte deux pièces (61 et 63;71 et 76') solidarisées entre elles, au moins une partie de la surface intérieure de l'une d'entre elles (61; 71) étant, en position de fermeture de la capsule (65;75), en contact intime et sans jeu avec la surface extérieure du goulot et de l'épaule.

17. Tête de récipient (70) munie d'une capsule (75) selon la revendication 16, **caractérisée en ce que** ladite capsule (75) comporte deux parties (71 et 76') solidarisées entre elles par encliquetage, une partie de l'une (71) ayant la forme d'un plateau (72) muni d'ergots (74) à sa périphérie (73), l'autre ayant la forme d'une jupe (76') entourant le goulot et munie sur sa surface intérieure de rainures longitudinales (77) adjacentes à des cavités (78) qui piègent les ergots (74) du plateau (72).

## Patentansprüche

1. Verfahren zum Formen einer Verbindung (10 und 5; 10' und 5'; 10" und 5"; 10"' und 5"') bestehend aus mindestens zwei Werkstücken aus Kunststoff, welche relativ zueinander beweglich sind und sich zumindest in einer solchen Anordnung befinden, dass ihre Kontaktflächen eng an zusätzlichen Formen anliegen, mit folgenden Schritten:
a) Formen eines ersten Werkstücks (10; 10'; 10"; 10"') aus Kunststoff durch Heranführen eines ersten äußeren Werkzeugs (50 und 51), dessen Abdruck zumindest die insgesamt konvexe Form einer Oberfläche (11; 11') definiert, die mit dem zweiten Werkstück (5; 5'; 5", 5"') in Kontakt kommen soll, und eines inneren Werkzeugs (40 und 41), das mindestens einen Formkern (40) aufweist, welcher in den Innenraum der insgesamt konvexen Oberfläche hineinragt;
b) Entfernen des ersten äußeren Werkzeugs (50 und 51) und Halten des ersten Werkstücks auf dem inneren Werkzeug (40 und 41);
c) Anbringen eines zweiten äußeren Werkzeugs (55), dessen Abdruck mit der insgesamt konvexen Oberfläche (11; 11') des ersten Werkstücks einen Raum (56) geringer Höhe in Bezug auf die insgesamt konvexe Oberfläche abgrenzt;
d) Heranführen des zweiten äußeren Werkzeugs (55) und des ersten Werkstücks (10; 10'; 10"; 10''') und anschließendes Formen des zweiten Werkstücks (5; 5'; 5"; 5"');
e) Entfernen der Werkzeuge (55 und 52; 40 und 41) und Entformen der Konstruktion bestehend aus den beiden so geformten Werkstücken (10 und 5; 10' und 5'; 10" und 5"; 10"' und 5"'),
**dadurch gekennzeichnet, dass** das Formen des zweiten Werkstücks durch Füllen des Raums (56) geringer Höhe in Bezug auf die insgesamt konvexe Oberfläche (11; 11') mit einem Kunststoff erfolgt, der auf eine höhere Temperatur als die Schmelztemperatur des Kunststoffs des ersten Werkstücks erwärmt wird.

2. Verfahren nach Anspruch 1, **dadurch gekennzeichnet, dass** der Kunststoff des ersten Werkstücks (10; 10' : 10"; 10"') nicht vollständig stabilisiert ist, wenn mit dem Schritt c) begonnen wird.

3. Verfahren nach Anspruch 1, **dadurch gekennzeichnet, dass** es durch folgenden Endschritt ergänzt wird:
f) Abkühlung und vollständige Stabilisierung der beiden Kunststoffe vor dem letzten Entformungsschritt des zweiten Werkstücks (5; 5'; 5"; 5'''), bei dem ein Werkstück (5; 5'; 5") oder ein Teil eines Werkstücks (5''') relativ zum anderen (10; 10'; 10"; 10"') bewegt wird.

4. Verfahren nach Anspruch 1, **dadurch gekennzeichnet, dass** der Formkern (40) des inneren Werkzeugs (40 und 41) in allen Punkten nahe bei der insgesamt konvexen Oberfläche (11') des ersten Werkstücks (10') liegt.

5. Verfahren nach Anspruch 1, **dadurch gekennzeichnet, dass** der Kunststoff des zweiten Werkstücks ein Gleitmittel enthält.

6. Verfahren nach Anspruch 1, **dadurch gekennzeichnet, dass** das erste Werkstück (5, 5', 5", 5''') aus Polyethylen und das zweite Werkstück (10, 10', 10", 10''') aus Polypropylen ist.

7. Verfahren nach Anspruch 1, **dadurch gekennzeichnet, dass** die insgesamt konvexe Oberfläche des ersten Werkstücks und die insgesamt konkave Oberfläche des zweiten Werkstücks mit Mitteln zur Herstellung einer vorläufigen Verbindung versehen sind, die beim letzten Entformungsschritt des zweiten Werkstücks zusammenwirken.

8. Verfahren zum Formen eines Behälterkopfes mit einem Hals und seiner Verschlusskapsel (10 und 5; 10' und 5'; 10" und 5"; 10"' und 5"'), mit folgenden Schritten:
a) Formen des Kopfes (10; 10'; 10"; 10"') aus Kunststoff durch Heranführen eines ersten äußeren Werkzeugs (50 und 51), dessen Abdruck die Außenfläche des Schulterteils und die des Halses (3; 3'; 3"; 3"') definiert, und eines inneren Werkzeugs (40 und 41) mit einem Formkern (40), der dazu bestimmt ist, zumindest die Innenfläche des Halses (3; 3'; 3"; 3"') zu formen;
b) Entfernen des ersten äußeren Werkzeugs (50 und 51) und Halten des Kopfes auf dem inneren Werkzeug (40 und 41);
c) Anbringen eines zweiten äußeren Werkzeugs (55), dessen Abdruck mit der Außenfläche (11; 11'; 11"; 11"') des Halses (3; 3'; 3"; 3"') einen Raum (56) geringer Höhe abgrenzt;
d) Heranführen des zweiten äußeren Werkzeugs (55) und des Kopfes (10; 10' : 10"; 10"') und anschließendes Formen der Kapsel (5; 5'; 5"; 5''');
e) Entfernen der Werkzeuge (55 und 52; 40 und 41) und Entformen des Behälterkopfes mit seiner so gebildeten Kapsel (10 und 5; 10' und 5'; 10" und 5"; 10"' und 5"');
f) Abkühlung und vollständige Stabilisierung der beiden Kunststoffe vor dem letzten Entformungsschritt der Kapsel (5; 5'; 5"; 5"'), bei dem die Kapsel (5; 5'; 5") oder ein Teil der Kapsel (5"') relativ zum Hals (10; 10'; 10"; 10"') bewegt wird,
**dadurch gekennzeichnet, dass** das Formen der Kapsel (5; 5'; 5"; 5"') durch Füllen des Raums (56) geringer Höhe in Bezug auf die Außenfläche (11; 11'; 11''; 1''') des Halses (3; 3'; 3"; 3"') mit einem Kunststoff erfolgt, der auf eine höhere Temperatur als die Schmelztemperatur des Kunststoffs des ersten Werkstücks erwärmt wird.

9. Verfahren zum Formen eines Behälterkopfes nach Anspruch 8, **dadurch gekennzeichnet, dass** die Kapsel (5; 5'; 5"; 5''') aus Polypropylen ist und der Hals (10; 10'; 10"; 10''') aus Polyethylen ist.

10. Behälterkopf (10) mit seiner Kapsel (5) bestehend aus einem zylindrischen Hals, wobei die Außenfläche des Halses keine Unebenheiten aufweist und bei verschlossenem Behälter mit der Innenfläche der Kapsel in engem, spielfreien Kontakt steht, **dadurch gekennzeichnet, dass** die Kapsel aus einem Material besteht, dessen Schmelztemperatur höher ist als die des Materials, aus dem der Hals gebildet ist, und dass der Hals einen orthogonalen elliptischen Querschnitt hat, wobei das Verhältnis Nebenachse zu Hauptachse größer als 0,9 bleibt.

11. Behälterkopf mit seiner Kapsel (5) bestehend aus einem Hals (3), wobei die Außenfläche des Halses und die Innenfläche der Kapsel bei verschlossenem Behälter in engem, spielfreien Kontakt stehen und Verschraubungsmittel tragen, die sich einwandfrei ergänzen und einem Gewinde entsprechen, das aus einem einzigen Gewindegang trapezförmigen Querschnitts besteht, **dadurch gekennzeichnet, dass** die Kapsel aus einem Kunststoff gefertigt ist, dessen Schmelztemperatur höher ist als die des Materials, aus dem der Hals gebildet ist, dass der mit dem Gewinde versehene Hals einstückig ausgebildet ist und dass der Kunststoff der Kapsel ein Gleitmittel enthält.

12. Behälterkopf (10') mit seiner Kapsel (5') bestehend aus einem Hals (3'), wobei die Außenfläche (11') des Halses (3') und die Innenfläche der Kapsel bei verschlossenem Behälter in engem, spielfreien Kontakt stehen, **dadurch gekennzeichnet, dass** die Kapsel aus einem Kunststoff gefertigt ist, dessen Schmelztemperatur höher ist als die des Materials, aus dem der Hals gebildet ist, und dass die Außenfläche (11') des Halses (3') und die Innenfläche der Kapsel Verschraubungsmittel tragen, die sich einwandfrei ergänzen und Flachgewinden (20) entsprechen.

13. Behälterkopf (10') mit seiner Kapsel (5') bestehend aus einem Hals (3') nach Anspruch 12, **dadurch gekennzeichnet, dass** es sich bei den Flachgewinden (20) um Schnell-, Mehrgang- und Kurzgewinde handelt.

14. Behälterkopf mit seiner Verschlusskapsel nach einem der Ansprüche 10 bis 13, **dadurch gekennzeichnet, dass** die Kapsel in ihrem unteren Bereich mit einem Unverletzlichkeitsbeweisband (59) versehen ist.

15. Behälterkopf mit seiner Verschlusskapsel nach einem der Ansprüche 10 bis 14, **dadurch gekennzeichnet, dass** die Außenfläche des Halses mit einem Plättchen (49) versehen ist und dass die Innenfläche der Kapsel dem Plättchen gegenüberliegend mit einem Fenster (48) versehen ist, welches die das Plättchen einwandfrei ergänzende Öffnung verlängert und als Sichtkontrolle für die Verletzung des Behälters dient.

16. Behälterkopf (60; 70) mit seiner Kapsel (65; 75) nach einem der Ansprüche 10 bis 14, **dadurch gekennzeichnet, dass** die Kapsel (65; 75) zwei miteinander verbundene Teile (61 und 63; 71 und 76') aufweist, wobei einer davon (61; 71) in Schließstellung der Kapsel (65; 75) zumindest mit einem Teil seiner Innenfläche in engem, spielfreien Kontakt mit der Außenfläche des Halses und des Schulterteils steht.

17. Behälterkopf (70) mit einer Kapsel (75) nach Anspruch 16, **dadurch gekennzeichnet, dass** die Kapsel (75) zwei durch Einrasten miteinander verbundene Teile (71 und 76') aufweist, wobei ein Teil (71) die Form einer Platte (72) hat, die an ihrem Umfang (73) mit Zapfen (74) versehen ist, und der andere Teil die Form einer Schürze (76') hat, die den Hals umgibt und an ihrer Innenfläche mit Längsnuten (77) versehen ist, die an Ausnehmungen (78) angrenzen, welche die Zapfen (74) der Platte (72) aufnehmen.

## Claims

1. Method for shaping an assembly (10 and 5; 10' and 5', 10" and 5", 10"' and 5"') comprising at least two plastic parts that move relative to one another and are at least in a configuration where their contact surfaces assume complementary shapes, comprising the following stages:
a) shaping a first plastic part (10; 10'; 10"; 10"') by approaching a first external tooling (50 and 51) the cavity of which defines at least the overall convex shape of a surface (11; 11') intended to come into contact with the second part (5; 5'; 5"; 5"') and an internal tooling (40 and 41) comprising at least one core (40) that enters the internal volume of said overall convex surface;
b) withdrawing said first external tooling (50 and 51) and maintaining the first part on the internal tooling (40 and 41);
c) installing a second external tooling (55) the cavity of which defines, with the overall convex surface (11; 11') of the first part, a thin volume (56) opposite said overall convex surface;
d) approaching said second external tooling (55) and first part (10; 10'; 10"; 10"') then molding the second part (5; 5'; 5"; 5"');
e) withdrawing the toolings (55 and 52; 40 and 41) and extracting the assembly consisting of the two parts thus formed (10 and 5; 10' and 5'; 10" and 5"; 10"' and 5" '),
**characterized in that** the second part is molded by filling said thin volume (56) opposite said overall convex surface (11; 11') with a plastic material raised to a temperature higher than the melting point of the plastic material of said first part.

2. Method of claim, 1 **characterized in that** the plastic material the first part (10; 10'; 10"; 10"') is not completely stabilized when stage c) begins.

3. Method of claim 1, **characterized in that** it is completed by the following final stage:
f) cooling and completely stabilizing the two plastic materials before the last unmolding phase of the second part (5; 5'; 5''; 5"') which consists in displacing a part (5; 5'; 5") or a section of a part (5"') relative to the other (10; 10'; 10"; 10"').

4. Method of claim 1, **characterized in that** the core (40) of the internal tooling (40, 41) is close in every respect to the overall convex surface (11') of the first part (10').

5. Method of claim 1, **characterized in that** the plastic material of the second part comprises a sliding substance.

6. Method of claim 1, **characterized in that** the first part (5; 5'; 5"; 5"') is polyethylene and the second part (10; 10'; 10"; 10"') is polypropylene.

7. Method of claim 1, **characterized in that** the overall convex surface of the first part and the overall concave surface of the second part are provided with temporary connecting means that connect together in the last molding phase of the second part.

8. Method for shaping a recipient head comprising a neck and provided with a sealing cap (10 and 5; 10' and 5'; 10" and 5"; 10"' and 5"') comprising the following stages:
a) molding the plastic head (10; 10'; 10"; 10"') by approaching a first external tooling (50 and 51) the cavity of which defines the external surface of the shoulder and that of the external surface of the neck (3; 3'; 3"; 3"') and an internal tooling (40 and 41) comprising a core (40) intended to constitute at least the internal surface of the neck (3; 3'; 3"; 3"');
b) withdrawing said first external tooling (50 and 51) and maintaining the head on the internal tooling (40 and 41);
c) installing a second external tooling (55) the cavity of which defines, with the overall convex surface (11; 11'; 11"; 11"') of the neck (3; 3'; 3"; 3"'), a thin volume (56);
d) approaching said second external tooling (55) and the head (10; 10'; 10"; 10"') then molding the cap (5; 5'; 5''; 5''');
e) withdrawing the toolings (55 and 52; 40 and 41) and extracting the recipient head thus created (10 and 5; 10' and 5'; 10" and 5"; 10"' and 5"');
f) cooling and completely stabilizing the two plastic materials before the last unmolding phase of the cap (5; 5'; 5"; 5"') which consists in displacing the cap (5; 5'; 5") or a section of the cap (5"') relative to the neck (10; 10'; 10"; 10"'),
**characterized in that** the cap (5; 5'; 5"; 5"') is molded by filling said thin volume (56) opposite said external surface (11; 11'; 11"; 11"') of the neck (3; 3'; 3"; 3"') with a plastic material raised to a temperature higher than the melting point of the plastic material of said first part.

9. Method for shaping a recipient head of claim 8 **characterized in that** the cap (5; 5'; 5"; 5"') is polypropylene and the neck (10; 10'; 10"; 10"') is polyethylene.

10. Recipient head (10) provided with a cap (5) comprising a cylindrical neck, the external surface of said neck not comprising any unevenness and, when the recipient is sealed, lying in close, play-free contact with the internal surface of said cap, **characterized in that** said cap is produced in a material the melting point of which is greater than that of the material that constitutes the neck and **in that** said neck has an elliptical orthogonal cross-section, the ratio between the small axis and the large axis being greater than 0.9.

11. Recipient head provided with a cap (5) comprising a neck (3), the external surface of the neck and the internal surface of the cap being in close, play-free contact when the recipient is sealed and bearing perfectly complementary screwing means of a threading consisting of a single thread with a trapezoidal cross-section, **characterized in that** said cap is produced in a plastic material the melting point of which is greater than that of the material that constitutes the neck and **in that** said threaded neck is produced in a single part and that the plastic material of the cap contains a sliding substance.

12. Recipient head (10') provided with a cap (5') comprising a neck (3'), the external surface (11') of the neck (3') and the internal surface of the cap being in close, play-free contact when the recipient is sealed, **characterized in that** said cap is produced in a plastic material the melting point of which is greater than that constituting the neck and **in that** said external surface (11') of the neck (3') and internal surface of the cap bear perfectly complementary screwing means consisting of shallow threads (20).

13. Recipient head (10') provided with a capsule (5') comprising a neck (3') of claim 12 **characterized in that** said shallow threads (20) are rapid, multiple, short threads.

14. Recipient head provided with a sealing cap of any of claims 10 to 13 **characterized in that** the lower section of the cap is provided with a tamperproof strip (59).

15. Recipient head provided with a sealing cap of any of claims 10 to 14 **characterized in that** the external surface of the neck is provided with a disc (49) and **in that** the internal surface of the cap is provided with a window (48) opposite said disc that continues the aperture, which matches said disc (49) perfectly, and that shows that the recipient has been opened.

16. Recipient head (60, 70) provided with a cap (65, 75) of any of claims 10 to 14 **characterized in that** the cap (65, 75) comprises two parts (61 and 63; 71 and 76) connected together, at least one section of the interior surface of one of them being in close, play-free contact with the external surface of the neck and shoulder when the cap (65, 75) is in the closed position.

17. Recipient head (70) provided with a cap (75) of claim 16 **characterized in that** said cap (75) comprises two sections (71 and 76') that are clipped together, one part of one (71) of them being in the shape of a plate (72) provided with pins (74) on its periphery, the other being in the shape of a skirt (76') that surrounds the neck, the inner surface of which is provided with longitudinal grooves (77) adjacent to the cavities (78) that trap the pins (74) of the plate (72).
